# EUROPÄISCHE PATENTSCHRIFT

(11) **EP 1 333 997 B1**
(45) Veröffentlichungstag und Bekanntmachung des Hinweises auf die Patenterteilung: **09.08.2006**
(21) Anmeldenummer: 01980500.1
(22) Anmeldetag: 18.10.2001
(51) Int. Cl.: B60J 7/02

(54) **HALTEFEDER ZUR LÖSBAREN VERBINDUNG VON ZWEI BAUTEILEN**
RETAINING SPRING FOR DETACHABLY CONNECTING TWO COMPONENTS
RESSORT DE MAINTIEN DESTINE A LA FIXATION AMOVIBLE DE DEUX COMPOSANTS

(30) Priorität: 02.11.2000 DE 10054334
(43) Veröffentlichungstag der Anmeldung: 13.08.2003
(73) Patentinhaber: A. Raymond & Cie, 38019 Grenoble-Cedex (FR)
(72) Erfinder: DE JONG, Michael, 79589 Binzen (DE); LINDEMANN, Frank, 79576 Weil am Rhein (DE)
(74) Vertreter: Rüttgers, Joachim
(86) Internationale Anmeldenummer: PCT/EP2001/012070
(87) Internationale Veröffentlichungsnummer: WO 2002/036374

(56) Entgegenhaltungen:
- DE-A- 4 031 017
- FR-A- 1 399 990
- FR-E- 86 990
- US-A- 4 280 254

## Beschreibung

Die Erfindung bezieht sich auf eine Haltefeder zur lösbaren Verbindung von zwei Bauteilen nach dem Oberbegriff des Anspruchs 1, wie sie beispielsweise bekannt ist aus **DE 40 31 017C2.**

Derartige Haltefedern werden verwendet zur Festlegung eines verschiebbaren Bauteils gegenüber einem feststehenden Bauteil, wie beispielsweise eines Autoschiebedachs im Dach eines Kraftfahrzeugs. Die Haltefeder ist hierbei üblicherweise am feststehenden Bauteil befestigt, während am verschieblichen Bauteil ein entsprechender Rastvorsprung vorgesehen ist. Von diesem Rastvorsprung wird die Haltefeder beim Heranführen des verschieblichen Bauteils zunächst hochgedrückt, wobei der Rastvorsprung am Einführschenkel vorbeigleitet. Sobald der Rastvorsprung die Rastkante der Haltefeder passiert hat, federt die Haltefeder wieder in ihre Ausgangslage zurück. Zum Lösen der Rastverbindung wird die Haltefeder so weit hochgebogen, bis der Rastvorsprung beim Herausziehen des Bauteils ungehindert an der Rastkante der Haltefeder vorbeigeht.

Dieser Lösevorgang läßt sich problemlos bei nur einer Verbindungsstelle durchführen, wenn der Monteur genügend Platz zum Anheben der Haltefeder hat und gleichzeitig mit der anderen Hand das verschiebliche Bauteil von dem feststehenden Bauteil wegbewegen kann. Handelt es sich jedoch um die Festlegung von Bauteilen mit mehreren Verbindungsstellen und sind diese in dichtem Abstand von einer Außenwand umgeben, so hat der Monteur große Schwierigkeiten, die verschiedenen Haltefedern mit bloßen Händen bzw. Fingern zu lösen und gleichzeitig das verschiebliche Bauteil abzuziehen.

Aufgabe der Erfindung ist es, hier Abhilfe zu schaffen und die vorgenannte Haltefeder so auszubilden, daß sich das verschiebliche Bauteil auch bei mehreren Verbindungsstellen und beengten Platzverhältnissen gut lösen läßt und anschließend auch wieder zum Einrasten gebracht werden kann.

Diese Aufgabe wird erfindungsgemäß mit den kennzeichnenden Merkmalen des Anspruchs 1 gelöst.

Die mit der erfindungsgemäßen Haltefeder hergestellte Verbindung läßt sich vom Monteur auf einfache Weise dadurch lösen, daß der Einführschenkel jeder Haltefeder zunächst hochgedrückt und dann die Rastfedern bis zum Anschlag zurückgeschoben werden. Nachdem alle Verbindungsstellen freigelegt sind, kann das verschiebliche Bauteil ohne Mühe abgezogen werden. Zum Wiedereinsatz der Haltefeder muß dann die Rastfeder wieder in die vordere Raststufe gezogen werden, wo sie durch Federkraft gehalten wird. Der Rastvorsprung des verschieblichen Bauteils läßt sich dann leicht unter die Rastkante hindurch bis zum Einrasten einführen.

Nach einer bevorzugten Ausführungsform der Erfindung werden die Rastmittel dadurch gebildet, daß in der Halteplatte ein Schnepper auffederbar eingearbeitet und in dem verschiebbar geführten Teil der Rastfeder eine entsprechende Aussparung vorgesehen ist, in welche der Schnepper einrastet. Hierbei ist es zweckmäßig, wenn der Widerstand gegen das Ausrasten des Schneppers größer ist als der Widerstand zur Überwindung der Auffederkraft der Rastfeder.

In der Zeichnung ist ein Ausführungsbeispiel der Erfindung dargestellt, welches nachfolgend näher erläutert werden soll. Es zeigt:

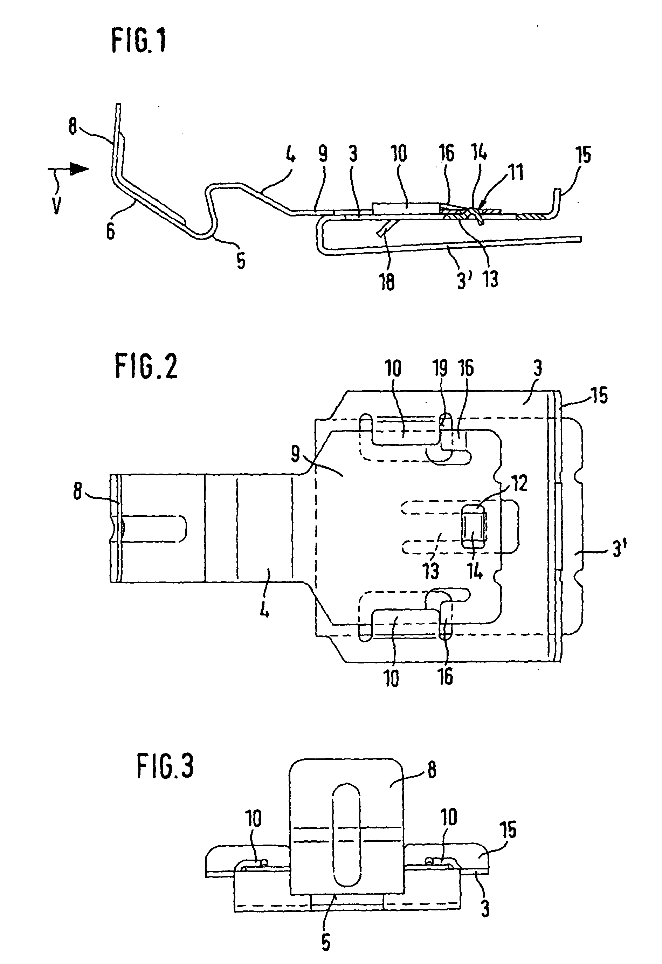

- Fig. 1: eine zweiteilige Haltefeder in einer Seitenansicht,
- Fig. 2: die gleiche Haltefeder in einer Draufsicht,
- Fig. 3: die gleiche Haltefeder in einer Vorderansicht gemäß Pfeil V in Figur 1,
- Fig. 4: die Montagesituation in perspektivischer Darstellung,
- Fig. 5: einen Ausschnitt der zu verbindenden Bauteile mit eingerasteter Haltefeder in Schließposition und
- Fig. 6: den gleichen Ausschnitt mit ausgerasteter Haltefeder in Öffnungsposition.

Die in den Figuren dargestellte Haltefeder dient zur lösbaren Verbindung von zwei gegeneinander verschiebbaren Bauteilen bei sehr beengten Platzverhältnissen in der unmittelbaren Umgebung der Verbindungsstellen.

Die Haltefeder besteht hierbei aus einer am feststehenden Bauteil **1** anbringbaren Halteplatte **3** und einer als separates Teil ausgebildeten und auf der Halteplatte **3** in Aufsteckrichtung verschiebbar geführten auffederbaren Rastfeder **4.** Die Halteplatte **3** ist im vorliegenden Ausführungsbeispiel mit einem C-förmig angesetzten Klemmschenkel **3'** klammerartig verbunden und mittels dieses Klemmschenkels **3'** auf dem Rand des Bauteils **1** aufgesteckt und festgeklemmt. Die Rastfeder **4** ist mit einer Rastkante **5** versehen, welche zur Verbindung mit dem anderen verschiebbaren Bauteil **2** an einem auf letzteren angeformten Rastvorsprung **7** einrastet.

Die Rastfeder **4** besitzt einen in Aufsteckrichtung vor der Rastkante **5** schräg angeformten Einführschenkel **6,** welcher beim Einführen des verschieblichen Bauteils **2** von dessen Rastvorsprung **7** hochgedrückt wird. Am freien Ende des Einführschenkels **6** ist weiterhin ein quer zur Aufsteckrichtung abstehender Halteschenkel **8** angeformt, welcher sowohl zum Hochdrücken der Rastfeder **4** als auch zum Hervorziehen der nach rückwärts verschobenen Rastfeder **4** dient.

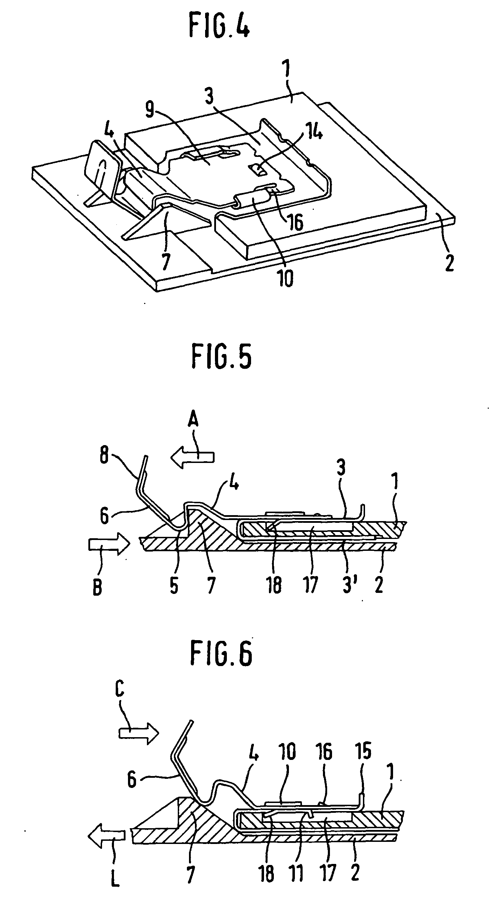

Auf der anderen Seite der Rastkante **5** ist die Rastfeder **4** mit einer Verschiebeplatte **9** verbunden, welche unmittelbar auf der Halteplatte **3** aufliegt und seitlich zwischen zwei an der Halteplatte **3** vorgesehenen Führungswinkeln **10** verschiebbar geführt ist, und zwar zwischen einer Rastposition (**Figur 5**) und einer Löseposition (**Figur 6**).

Die Halteplatte **3** besitzt am hinteren Ende eine hochgebogene Anschlagkante **15,** welche die Bewegungsfreiheit der Verschiebeplatte **9** nach hinten begrenzt. Außerdem sind am Seitenrand der Verschiebeplatte **9** zwei elastisch niederdrückbare Federfinger **16** entgegen der Aufsteckrichtung schräg nach oben gerichtet, welche beim Einführen der Verschiebeplatte **9** zwischen den Führungswinkeln **10** nach unten ausweichen und dann wieder in die Schräglage zurückfedern. Die Schräglage ist so ausgerichtet, daß die Finger **16** gegen die Seitenkanten **19** der Führungswinkel **10** anschlagen und so die Bewegungsfreiheit nach vorne begrenzen.

Um die Rastfeder **4** in der Rastposition festzulegen, sind Rastmittel vorgesehen, bestehend aus einem Schnepper **11** und einer mit diesem zusammenwirkenden Aussparung **12** in der Verschiebeplatte **9** zum Einrasten des Schneppers **11.** Der Schnepper **11** ist hierbei in die Halteplatte **3** eingearbeitet, wobei ein schmaler Streifen **13** aus der Halteplatte **3** mit dem üblichen Freischnitt ausgestanzt und am auffederbaren Ende zu einem Rastbogen **14** geformt ist. Hierbei ist darauf zu achten, daß der Lösewiderstand des Schneppers **11** größer ist als der Einführwiderstand der Rastfeder **4,** damit beim Einführen des verschieblichen Bauteils **2** die Rastfeder **4** beim Hochdrücken des Einführschenkels **6** auf jeden Fall in der Rastposition festgehalten wird.

In dem Bauteil **1** ist auf dessen Oberseite eine Nut **17** von mindestens der Breite des Schneppers **11** ausgespart, damit der Schnepper **11** beim Überfahren der Verschiebeplatte **9** ungehindert nach unten ausweichen kann. Um die klammerartig ausgebildete Halteplatte **3** besser auf den Rand des Bauteils **1** festlegen zu können, besitzt die Halteplatte **3** in ihrer Mitte einen mit Freischnitt ausgestanzten, schräg entgegen der Aufsteckrichtung, nach unten abstehenden Raststeg **18,** welcher nach dem Aufdrücken der Halteklammer **3, 3'** in die Nut **17** einrastet.

Die Wirkungsweise der zweiteiligen Haltefeder ist in den **Figuren 5 und 6** anschaulich dargestellt und soll hier kurz beschrieben werden:

**Figur 5** zeigt die auf das Bauteil **1** aufgeklammerte Haltefeder mit in Pfeilrichtung **A** vorgeschobener Rastfeder **4.** Das Bauteil **2** ist gleichzeitig in Pfeilrichtung **B** zum Bauteil **1** hin verschoben, wobei die Rastkante **5** hinter dem Rastvorsprung **7** eingerastet ist.

**Figur 6** zeigt die gleiche Haltefeder in der Öffnungsposition. Um in diese zu gelangen, muß zunächst der Einführschenkel **6** mit dem Finger oder einem geeigneten Werkzeug angehoben werden, bis die Rastkante **5** den Rastvorsprung **7** überragt. Sodann wird die Rastfeder **4** in Pfeilrichtung **C** nach hinten bis zum Anschlag **15** zurückgeschoben und liegt dabei auf der Rückseite des Rastvorsprungs **7** auf, so daß das Bauteil **2** problemlos in Pfeilrichtung **L** herausgezogen werden kann.

Um das Bauteil **2** wieder einführen und verrasten zu können, muß die Rastfeder **4** mittels des Halteschenkels **8** entgegen der Pfeilrichtung **C** wieder in die Rastposition gezogen werden, bis der Schnepper **11** in die Aussparung **12** eingerastet ist.

### Bezugszeichenliste

- 1: feststehendes Bauteil
- 2: verschiebliches Bauteil
- 3: Halteplatte
- 4: Rastfeder
- 5: Rastkante
- 6: Einführschenkel
- 7: Rastvorsprung
- 8: Halteschenkel
- 9: Verschiebeplatte
- 10: Führungswinkel
- 11: Schnepper
- 12: Aussparung
- 13: Streifen
- 14: Rastbogen
- 15: Anschlag
- 16: Federfinger
- 17: Nut
- 18: Raststeg
- 19: Seitenkanten

## Patentansprüche

1. Haltefeder zur lösbaren Verbindung von einem verschiebbaren Bauteil gegenüber einem feststehenden Bauteil, bestehend aus einer an einem der Bauteile (1) anbringbaren Halteplatte (3) und einer von der Halteplatte (3) aus vorstehenden Rastfeder (4) mit einer auffederbaren Rastkante (5) zum Einrasten an einem auf dem anderen Bauteil (2) vorgesehenen Rastvorsprung (7) und einem vor der Rastkante (5) schräg von der Halteplatte (3) wegweisend angeformten Einführschenkel (6), **dadurch gekennzeichnet, daß** die Rastfeder (4) als separates Teil ausgebildet und auf der Halteplatte (3) zwischen einer Rastposition und einer Löseposition mittels einer Verschiebeplatte (9) verschiebbar geführt ist und die Rastposition durch Rastmittel (11, 12) festgelegt ist, deren Lösewiderstand größer als ein Einführwiderstand der Rastfeder (4) zum Einrasten an dem Rastvorsprung (7) ist.

2. Haltefeder nach Anspruch 1, **dadurch** gekenneeichnet, dass die Rastmittel aus einem in der Halteplatte (3) eingearbeiteten, auffederbaren Schnepper (11) und einer in der Verschiebeplatte (9) der Rastfeder (4) vorgesehenen Aussparung (12) zur Aufnahme des Schneppers (11) gebildet sind.

3. Haltefeder nach Anspruch 2, **dadurch gekennzeichnet, daß** der Widerstand gegen das Ausrasten des Schneppers (11) größer ist als der beim Andrücken des Rastvorsprungs (7) gegen den Einführschenkel (6) sich ergebende Widerstand zur Überwindung der Auffederkraft der Rastfeder (4).

4. Haltefeder nach Anspruch 1 bis 3, **dadurch gekennzeichnet, daß** am freien Ende des Einführschenkels (6) ein quer zur Aufsteckrichtung abstehender Halteschenkel (8) angeformt ist.

5. Haltefeder nach Anspruch 1 bis 3, **dadurch gekennzeichnet, daß** die Verschiebeplatte (9) am Seitenrand zwei schräg angestellte, elastisch niederdrückbare Federfinger (16) besitzt, die so ausgerichtet sind, daß die freien Enden der Federfinger (16) nach dem Einführen der Verschiebeplatte (9) in zwei an der Halteplatte (3) vorgesehene Führungswinkel (10) gegen die Seitenkanten (19) der Führungswinkel (10) anschlagen.

## Claims

1. Retaining spring for detachably connecting a displaceable component relative to a fixed component, comprising a retaining plate (3) mountable on one of the components (1) and a detent spring (4) projecting from the retaining plate (3), said detent spring having a flexibly sprung detent edge (5) for latching on a latching projection (7) provided on the other component (2) and an introducing limb (6) formed in front of the detent edge (5) inclined facing away from the retaining plate (3), **characterised in that** the detent spring (4) is designed as a separate part and is displaceably guided on the retaining plate (3) by means of a displacement plate (9) between a latching position and a detaching position and the latching position is fixed by latching means (11, 12) whose detaching resistance is greater than an introducing resistance of the detent spring (4) for latching on the latching projection (7).

2. Retaining spring according to claim 1, **characterised in that** the latching means comprises a flexibly sprung catch (11) and a cut-out (12) provided in the displacement plate (9) of the detent spring (4) for receiving the catch (11).

3. Retaining spring according to claim 2, **characterised in that** the resistance to the unlatching of the catch (11) is greater than the resistance produced on pressing the latching projection (7) against the introducing limb (6) to overcome the spring-back force of the detent spring (4).

4. Retaining spring according to claims 1 to 3, **characterised in that** formed at the free end of the introducing limb (6) is a retaining limb (8) standing out transversely to the placement direction.

5. Retaining spring according to claims 1 to 3, **characterised in that** the displacement plate (9) has two elastically depressable spring fingers (16) arranged inclined at the side edge, which are oriented such that the free ends of the spring fingers (16) make contact with the side edges (19) of the guide angles (10) after introduction of the displacement plate (9) into two guide angles (10) provided on the retaining plate (3).

## Revendications

1. Ressort de retenue pour l'assemblage, avec une possibilité vde désolidarisation ultérieure, d'un élément de construction mobile par rapport à un élément de construction fixe, se composant d'une plaque de retenue (3) destinée à être montée sur l'un (1) des éléments de construction et d'un ressort d'accrochage (4) faisant saillie depuis la plaque de retenue (3), comportant une arête d'accrochage capable de céder par déformation élastique (5) destinée à venir s'engager en prise d'encastrement avec une saillie d'accrochage (7) prévue sur l'autre élément de construction (2) et une patte d'introduction (6) allant en s'écartant de la plaque de retenue (3) suivant une orientation oblique réalisée solidaire par formage devant l'arête d'accrochage (5), **caractérisé en ce que** le ressort d'accrochage (4) se présente sous la forme d'un élément séparé et qu'il est disposé avec la possibilité de coulisser entre une position d'accrochage en prise de fixation et une position de dégagement et **en ce que** la position d'accrochage en prise de fixation est obtenue au moyen d'organes d'accrochage (11, 12) dont la résistance à la dissociation est plus forte que la résistance d'introduction du ressort d'accrochage (4) pour sa mise en prise d'encastrement avec la saillie d'accrochage (7).

2. Ressort de retenue selon la revendication 1, **caractérisé en ce que** les organes d'accrochage se composent d'un élément formant déclic (11) capable de céder par déformation élastique, réalisé par façonnage mécanique dans la plaque de retenue (3) et d'un évidement ménagé dans la plaquette coulissante (9) du ressort de retenue (4) dans lequel l'élément formant déclic (11) est destiné à venir se loger.

3. Ressort de retenue selon la revendication 2, **caractérisé en ce que** la résistance au dégagement de l'élément formant déclic (11) est plus grande que la résistance qui est exercée lorsque la saillie d'accrochage (7) est appliquée par pression contre la patte d'introduction (6) pour vaincre la capacité de cédage élastique du ressort de retenue (4).

4. Ressort de retenue selon les revendications 1 à 3, **caractérisé en ce qu'**une patte de retenue (8), faisant saillie obliquement par rapport au sens de l'emmanchement, est réalisée solidaire par formage dans le prolongement de l'extrémité libre de la patte d'introduction (6).

5. Ressort de retenue selon les revendications 1 à 3, **caractérisé en ce que** la plaquette coulissante (9) est munie, au niveau de son bord latéral, de deux doigts élastiques (16) à disposition oblique, qui sont susceptibles d'être repoussés par pression vers le bas, qui sont orientés de telle façon que les extrémités libres des doigts élastiques (16) viennent, après l'introduction de la plaquette coulissante (9) dans deux cornières de guidage (10) prévues sur la plaque de retenue (3), en butée contre les bords latéraux (19) des cornières de guidage (10).
